# EUROPÄISCHE PATENTANMELDUNG

(11) **EP 3 062 179 A1**
(43) Veröffentlichungstag der Anmeldung: **31.08.2016**
(21) Anmeldenummer: 15156217.0
(22) Anmeldetag: 24.02.2015
(51) Int. Cl.: G05B 19/048

(54) **VERFAHREN UND EINRICHTUNG ZUR ANZEIGE EINES PROZESSBILDELEMENTS AUF EINER GRAFISCHEN BENUTZEROBERFLÄCHE EINES BATCH-SYSTEMS**

(71) Anmelder: Siemens Aktiengesellschaft, 80333 München (DE)
(72) Erfinder: Roßkopf, Harald, 76327 Pfinztal-Wöschbach (DE)

(57) **Zusammenfassung**

Die Erfindung betrifft ein Verfahren zum Betreiben einer Automatisierungseinrichtung, wobei auf einer grafischen Benutzeroberfläche eines Batch-Systems (3) Rezeptelemente (20) eines Steuerrezepts (19) dargestellt und die Rezeptelemente (20) während des Chargenprozesses sequentiell verarbeitet werden, und wobei auf einer grafischen Benutzeroberfläche eines Bedien- und Beobachtungs-Systems (2) Bildelemente (14 bis 17, 18) eines Prozessbildes (13) einer Produktions-Anlage dargestellt werden, die zur Herstellung einer Charge eines Produktes während des Chargenprozesses verwendet wird. Es werden Maßnahmen vorgeschlagen, mittels der ein Rezeptersteller sich ändernde Zustände der Produktions-Anlage während des Chargenprozess schnell erfassen kann.

## Beschreibung

Die Erfindung betrifft ein Verfahren zum Betreiben einer Automatisierungseinrichtung gemäß dem Oberbegriff des Patentanspruchs 1. Darüber hinaus betrifft die Erfindung eine Automatisierungseinrichtung gemäß dem Oberbegriff des Patentanspruchs 5, welches zur Durchführung des Verfahrens geeignet ist.

Eine Automatisierungseinrichtung mit geeigneten Hard- und Software-Komponenten zur Verwirklichung eines derartigen Verfahrens im Rahmen einer Batch-Automatisierung ist aus dem Siemens-Katalog "Prozessleitsystem SIMATIC PCS 7 - Systemkomponenten, Ausgabe 2014/15 bekannt. Mittels einer so genannten auf einem Batch-Client ablauffähigen "Batch-Software" erstellt ein Anwender ein auf einer grafischen Benutzeroberfläche des Batch-Clients darstellbares Rezept zur Steuerung eines Chargenprozesses (Batchprozesses), beispielsweise ein Rezept zur Herstellung von Kunstharz, Farbstoffen oder Düngemitteln. Ein derartiges Steuerrezept weist gewöhnlich eine Vielzahl von parallelverzweigten Teilrezepten auf, die jeweils mehrere Rezeptelemente in Form von Rezeptoperationen oder Rezeptfunktionen, z. B. Dosieren, Heizen oder Rühren, sowie Transitionen umfassen. Die Rezeptoperationen und/oder die Rezeptfunktionen stehen während des Steuerbetriebs in Wirkverbindung mit geeigneten Hard- und Softwarekomponenten, beispielweise mit mit Funktionsbaugruppen versehenen Automatisierungsgeräten und mit über einen Bus mit den Automatisierungsgeräten verbundenen Feldgeräten. Während dieses Steuerbetriebs arbeitet ein Batch-Server des Batch-Systems das Rezept sequentiell ab und korrespondierend dazu verarbeiten die mit dem Batch-Server online verbundenen Automatisierungsgeräte zu jeder Rezeptoperation bzw. Rezeptfunktion jeweils einen dieser Operation oder Funktion zugeordneten Softwarebaustein. Diese Softwarebausteine werden vor dem Steuerbetrieb beispielsweise mittels eines Engineering-Systems in das Automatisierungsgerät geladen, wobei weitere Software-Bausteine in das Automatisierungsgerät geladen werden können, um Ergänzungen an dem Rezept mittels weiterer Rezeptelemente vornehmen zu können; denn zu den weiteren Rezeptelementen sind korrespondierende Software-Bausteine auf dem Automatisierungsgerät erforderlich, die während der Abarbeitung der Rezeptelemente - also während der Steuerung des Chargenprozesses - mittels dieser Rezeptelemente angesprochen werden. Ein Operator erkennt mittels des auf der Benutzeroberfläche des Batch-Systems dargestellten Steuerrezepts (Rezeptbild), dessen Rezeptelemente ausgehend von einem Startpunkt (Beginn der Charge) bis zu einem Endpunkt (Ende der Charge) sequentiell verarbeitet werden, wo der Herstellungsprozess einer Charge gerade steht, d. h. welches der Rezeptelemente gerade verarbeitet wird, wobei der Rezeptersteller bzw. Operator die Rezeptelemente in geeigneter Weise modifizieren kann. Beispielsweise beeinflusst der Rezeptersteller Rezeptelemente in der Art, dass die Rührdauer eines Rührers einer Produktions-Anlage verlängert, ein Mischer kurzzeitig angehalten oder der Sollwert eines Reglers geändert wird.

Um eine Produktions-Anlage, welche zur Herstellung einer Charge eines Produktes während eines Chargenprozesses vorgesehen ist, grafisch auf der Benutzeroberfläche eines Operator- bzw. eines Bedien- und Beobachtungssystems darzustellen bzw. zu visualisieren, wird mittels eines grafischen Editors ein Prozessbild der Produktions-Anlage erstellt. Dieses Prozessbild weist Bildelemente auf, beispielsweise Bildelemente in Form eines Heizkessels, von Ventilen oder Motoren, wobei während der Prozesssteuerung - also im Runtime-Betrieb - ein Operator die Anlage (Teilanlage, "Verrohrungen", Füllstand eines Behälters, Temperatur des Inhalts des Behälters, ...) beobachten und bedienen kann. Dazu liest das Bedien- und Beobachtungssystems Prozesseingangswerte aus dem oder den Automatisierungsgeräten aus und stellt diese Werte in den entsprechenden Bildelementen des Prozessbildes dar. Mittels Bedieneingaben an (Bedien-)Bildelementen des Prozessbildes kann ein Operator Prozessausgangswerte beeinflussen, wobei entsprechend der Eingabe das Bedien- und Beobachtungssystem dem oder den Automatisierungsgeräten geänderte Prozessausgangswerte übermittelt, z. B. Prozessausgangswerte in Form von Sollwerten für Regler.

Das Bedienen und Beobachten des Zustandes der Anlage mittels des Prozessbildes einerseits und das Bedienen und Beobachten des Steuerrezepts anderseits ist nur getrennt möglich. Benötigt ein Rezeptersteller während der Darstellung des Steuerrezepts genauere Informationen über den Zustand einer Komponente der Produktions-Anlage, so muss der Operator zunächst in das Prozessbild wechseln und ferner im Prozessbild, welches gewöhnlich eine Vielzahl von Bildelementen in mehreren Ebenen aufweist, das Bildelement dieser Komponente suchen. Wird anschließend wieder in die Darstellung des Steuerrezepts gewechselt, d. h. öffnet der Operator wieder das Rezeptbild, so ist das gerade wieder neu geöffnete Rezeptbild schwer überschaubar, weil das Steuerrezept gewöhnlich sehr umfangreich ist und eine Vielzahl von Rezeptelementen aufweist. Dies ist insbesondere dann der Fall, wenn die Rezeptelemente in einer Vielzahl von verschiedenen Hierarchieebenen angeordnet sind, wodurch es zeitaufwendig ist, z. B. bestimmte Rezeptelemente auf der Benutzeroberfläche zu finden, um auf dieses Element zuzugreifen bzw. um dieses Element in einer bestimmten Art und Weise zu beeinflussen bzw. zu verändern.

Der Erfindung liegt daher die Aufgabe zugrunde, ein Verfahren der eingangs genannten Art anzugeben, mittels dem ein Rezeptersteller im Rezeptbild sich ändernde Zustände der Produktions-Anlage während des Chargenprozess schnell erfassen kann. Ferner ist ein Automatisierungssystem gemäß dem Oberbegriff des Anspruchs 5 zu schaffen, das zur Durchführung des Verfahrens geeignet ist.

Diese Aufgabe wird im Hinblick auf das Verfahren durch die im kennzeichnenden Teil des Anspruchs 1, bezüglich der Automatisierungseinrichtung durch die im kennzeichnenden Teil des Anspruchs 5 angegebenen Maßnahmen gelöst.

Vorteilhaft ist, dass Teile der Benutzeroberfläche des Bedien- und Beobachtungs-Systems in die Benutzeroberfläche des Batch-Systems" integriert sind. Wichtige Werte, z. B. Temperaturwerte eines Heizkessels, können direkt in das Rezeptbild eingeblendet werden.

In einer Ausgestaltung der Erfindung ist vorgesehen, dass eingeblendete Bildelemente zum Bedienen und Beobachten der Produktions-Anlage verwendet werden, wodurch eine Bedienung und Beobachtung einer Komponente der Produktions-Anlage ermöglicht wird, ohne auf die Benutzeroberfläche des Bedienund Beobachtungs-Systems zu wechseln.

In einer weiteren Ausgestaltung der Erfindung wird das Bildelement für eine vorgegebene Zeitspanne neben dem jeweiligen Rezeptelement eingeblendet. Ist die Zeitspanne abgelaufen, wird dieses Bildelement wieder ausgeblendet, wodurch die Übersichtlichkeit des Rezeptbildes erhalten bleibt.

Darüber hinaus ist erfindungsgemäß vorgesehen, mittels einer Bedienereingabe am Batch-System die Einblendung des Bildelements in das Rezeptbild ein- oder abzuschalten. Dadurch wird ermöglicht, dass der Operator bzw. Bediener sich nur diejenigen Bildelemente in das Rezeptbild einblenden lässt, die für ihn von Interesse sind.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen
- Figur 1: Bestandteile einer Automatisierungseinrichtung,
- Figur 2: einen Ausschnitt eines Prozessbildes einer Produktions-Anlage und
- Figuren 3 und 4: Rezepte zur Steuerung eines Chargenprozesses.

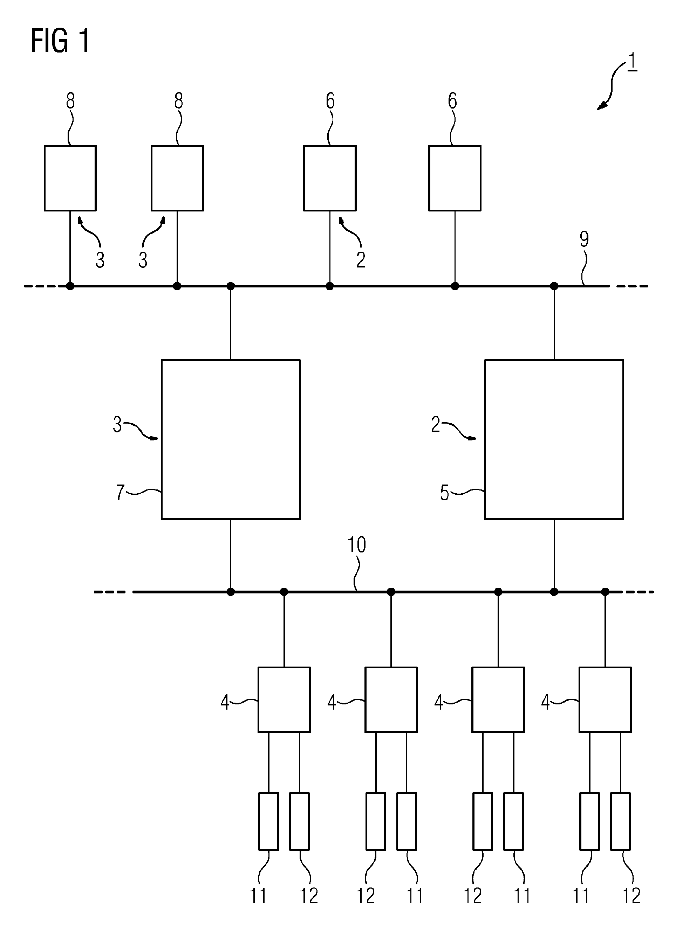

Die in den Figuren 1 bis 4 dargestellten gleichen Teile sind mit gleichen Bezugszeichen versehen.

In Figur 1 sind mit 1 Bestandteile einer Automatisierungseinrichtung bezeichnet, die mit einem Operator-System bzw. einem Bedien- und Beobachtungs-System 2, einem Batch-System 3 und mit Automatisierungsgeräten 4 versehen ist. Sowohl das Operator- als auch das Batch-System 2, 3 weisen jeweils eine grafische Benutzeroberfläche auf, die - wie im Folgenden noch gezeigt wird - im Hinblick auf das Operator-System 2 zum Erstellen und Anzeigen eines Prozessbildes einer Produktions-Anlage sowie zum Bedienen und Beobachten dieser Produktions-Anlage und bezüglich des Batch-Systems 3 zum Erstellen und Anzeigen eines Rezepts zur Steuerung eines Chargenprozesses sowie zum Modifizieren dieses Steuerrezepts während des Chargenprozesses vorgesehen ist. Selbstverständlich weist die Automatisierungseinrichtung weitere, hier nicht dargestellte Bestandteile bzw. Automatisierungskomponenten auf, z. B. Automatisierungskomponenten in Form von dezentralen Peripheriegeräten und/oder Engineering-Systemen und/oder Maintenance-Stationen. Das Operator-System 2 weist einen OS-Server 5 und mehrere OS-Clients 6 auf, wobei das Operator-System 2 und das Batch-System 3, welches einen Batch-Server 7 und mehrere Batch-Clients 8 umfasst, über geeignete Busverbindungen 9, 10 mit den OS-Clients 6, den Batch-Clients 8 und den Automatisierungsgeräten 4 zum Austausch von Informationen verbunden sind.

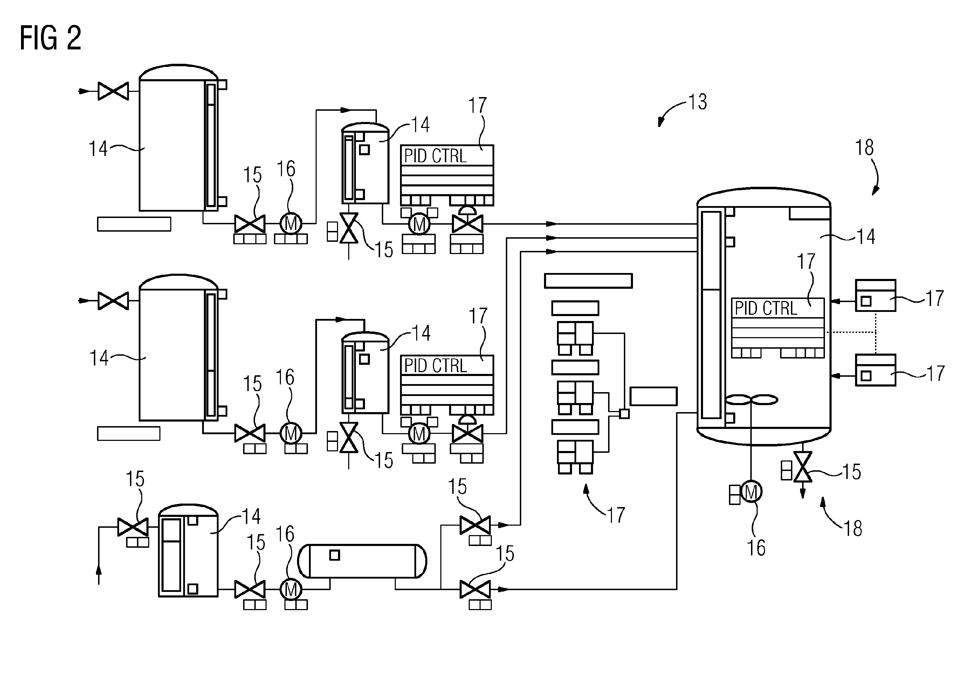

Die Produktions-Anlage ist zur Herstellung einer Charge eines Produkts vorgesehen, beispielsweise zur Herstellung einer Charge eines pharmazeutischen Produkts, wobei im vorliegenden Ausführungsbeispiel ein mit 13 bezeichnetes Prozessbild (Figur 2) dieser Produktions-Anlage auf dem OS-Client 6 des Operator-Systems 2 dargestellt wird. Dieses mittels des Operator-Systems 2 oder eines Engineerings-Systems der Automatisierungseinrichtung 1 erzeugte Prozessbild 13 weist eine Vielzahl von Bildelementen auf, beispielsweise Bildelemente in Form eines Behälters oder eines Heizkessels 14, in Form von Ventilen 15 oder Motoren 16, von Bedien- und Anzeigefeldern 17, wobei während der Steuerung des Chargenprozesses - also in einem Runtime-Betrieb - die Produktions-Anlage in einer an sich bekannten Art und Weise mittels des Prozessbildes 13 beobachtet und bedient wird. Ein Operator kann beispielsweise den Zustand der Produktions-Anlage, die Komponenten der Anlage (Teilanlage, "Verrohrungen", Füllstand der Behälter, Temperatur des Inhalts der Heizkessel, ...) beobachten bzw. betrachten und/oder über die Bedienfelder 17 im Prozessbild 13 bedienen.

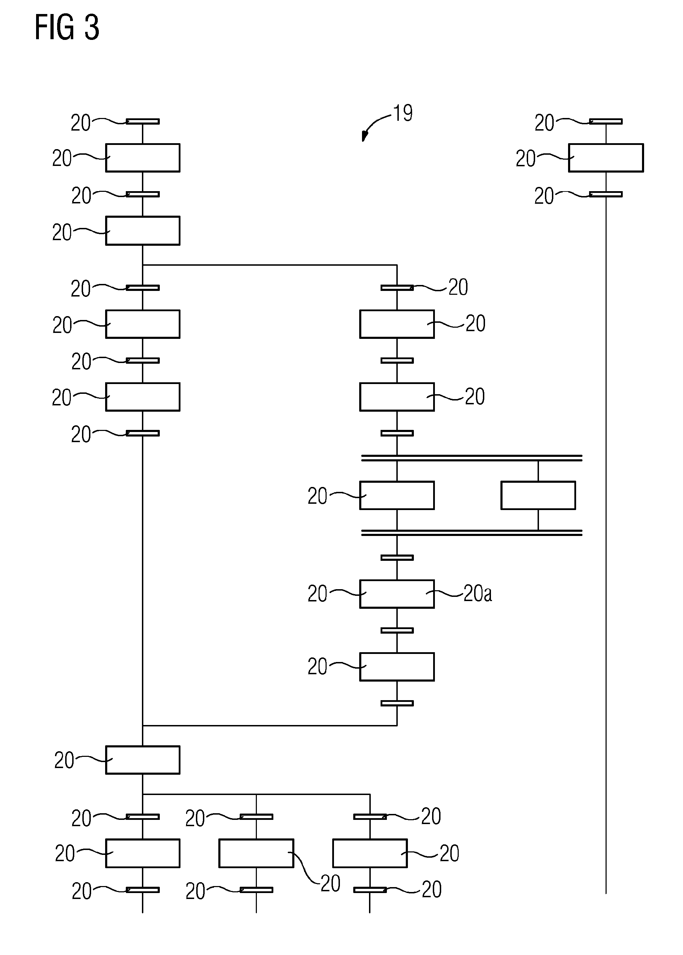

Im Folgenden wird auf Figur 3 verwiesen, in welcher ein Ausschnitt eines Steuerrezepts 19 gezeigt und das in einer an sich bekannten Weise auf einem Batch-Client 8 des Batch-Systems 3 oder auf einer Anzeigeeinheit des Engineering-Systems dargestellt ist. Dieses Steuerrezept 19 formuliert ein Anwender bzw. Rezeptersteller mittels eines auf dem Batch-System 3 oder auf dem Engineering-System ablauffähigen grafischen Rezepteditors. Das Steuerrezept 19 weist eine Vielzahl von vertikal und horizontal verbundenen sowie parallelverzweigten Rezeptelementen 20 auf, beispielsweise Rezeptelemente in Form von Rezeptoperationen oder Rezeptfunktionen - z. B. Dosieren, Heizen oder Rühren - sowie Transitionen oder Anweisungen. Der Batch-Server 3 verarbeitet zur Steuerung des Chargenprozesses die Rezeptelemente 20 des Steuerrezepts 19 sequentiell, wobei korrespondierend zur Verarbeitung dieser Rezeptelemente 19 mindestens eines der Automatisierungsgeräte 4 diesen Rezeptelementen 20 zugeordnete Software-Funktionsbausteine verarbeitet. Gewöhnlich übermitteln während der Steuerung des Chargenprozesses die Rezeptelemente 20 den jeweiligen Funktionsbausteinen Sollwerte und die Funktionsbausteine den jeweiligen Rezeptelementen 20 Istwerte, wobei aufgrund der Sollwerte Aktoren 12 angesteuert und von Sensoren 11 erfasste Signale, welche z. B. Temperatur- oder Druckwerte repräsentieren, als Istwerte eingelesen werden. Um dem Rezeptersteller zu ermöglichen, während des Chargenprozesses sich ändernde Zustände der Produktions-Anlage schnell zu erfassen, ist vorgesehen, Rezeptelemente mit den Bildelementen des Prozessbildes zu verknüpfen. Für den Fall, dass während der sequentiellen Verarbeitung des Steuerrezepts 19 gerade ein verknüpftes Rezeptelement verarbeitet wird, wird das oder die mit diesem Rezeptelement 20 verknüpften Bildelemente im Steuerrezept 19 auf der grafischen Benutzeroberfläche des Batch-Systems 3 eingeblendet. Die Verknüpfung kann in der Art und Weise bewerkstelligt werden, indem den Bildelementen des Prozessbildes 13 zunächst im Rahmen der Erstellung des Prozessbildes 13 mittels des Operator-Systems 2 oder des Engineering-Systems Kennungen zugeordnet werden. Diese Kennungen werden sowohl im Operator-System 2 als auch im Batch-System 3 hinterlegt, wobei der Rezeptersteller im Rahmen der Steuerrezepterstellung eine oder mehrere Kennungen den Rezeptelementen 20 des Steuerrezepts 19 zuweist.

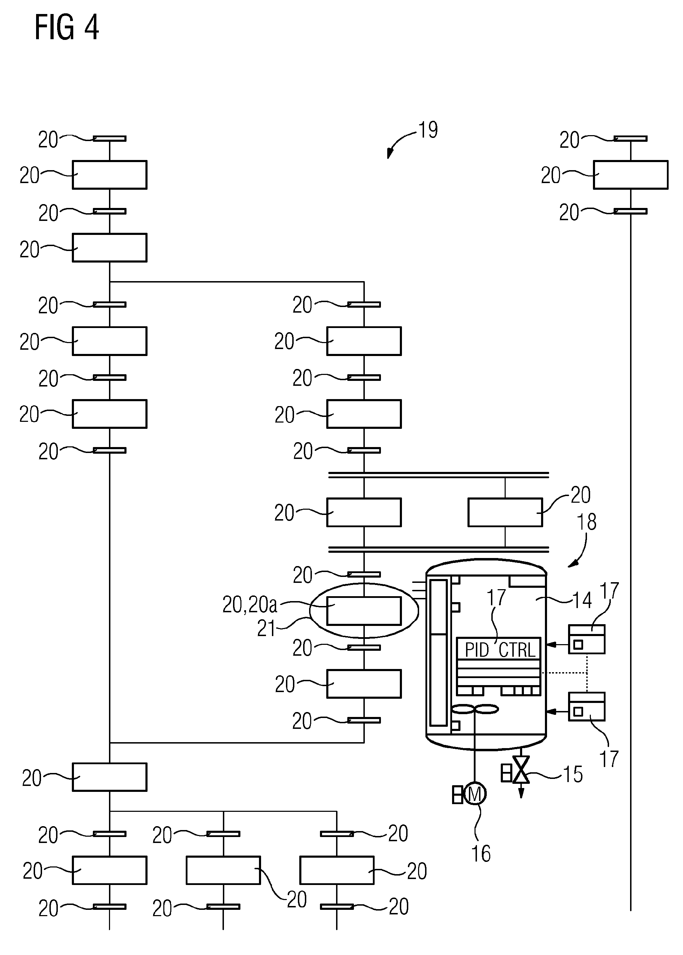

Im Folgenden wird angenommen, dass einem der Rezeptelemente 20, welches in den Figuren 3 und 4 mit einem weiteren Bezugszeichen 20a versehen ist, die Bildelemente 14 bis 17 einer Bildelementen-Gruppe 18 (Figur 2) zugewiesen ist. Dies bedeutet, dass das Rezeptelement 20a mit den Bildelementen 14 bis 17 dieser Gruppe 18 - im Folgenden als Bildelemente 18 bezeichnet - verknüpft ist bzw. die Bildelemente 18 mit dem Rezeptelement 20a verknüpft sind. Das Operator-System 2 und das Batch-System 3 stehen während der Verarbeitung des Steuerrezepts 19 derart in Wirkverbindung, dass zu einem Zeitpunkt, zu dem das Rezeptelement 20a gerade verarbeitet wird, was dem Rezeptersteller mittels einer Aktivkennung 21 angezeigt wird, die Bildelemente 18 im Steuerrezept 19 eingeblendet werden. Die Bildelemente 18 werden benachbart zum Rezeptelement 20a eingeblendet, wobei für den Fall, dass der Platz zwischen dem Rezeptelement 20a und einem weiteren benachbarten Rezeptelement oder einer benachbarten vertikalen oder horizontalen Verbindung nicht ausreicht, dieses Rezeptelement oder diese vertikale oder horizontale Verbindung automatisch derart verschoben wird, dass der Platz für die Einblendung ausreicht. Um die Bildelemente 18 einblenden zu können, fordert der Batch-Server 3 zunächst die Bildelemente 18 an, indem der Batch-Server 3 dem Operator-System 2 über die Busverbindung 9 ein geeignetes Anforderungssignal zuführt, welches die Kennungen der Bildelemente 18 umfasst. Nach dem Empfang dieses Anforderungssignals übermittelt das Operator-System 2 dem Batch-System 3 die angeforderten Bildelemente 18 zum Einblenden in das dargestellte Steuerrezept 19 des Batch-Systems 3. Mittels den eingeblendeten Bedienfeldern 17 der Bildelemente 18 kann der Operator die Sollwert-Temperatur eines Heizkessels beeinflussen bzw. ändern, der im Prozessbild 13 und im Rezeptbild 19 durch das Bildelement 14 repräsentiert bzw. dargestellt wird. Nach einer entsprechenden Sollwerteingabe übermittelt das Batch-System 3 dem Operator-System 2 neben der Kennung für die Bedienfelder 17 diesen Sollwert, welcher das Operator-System 2 dem oder den Automatisierungsgeräten 4 zuführt, die aufgrund dieser Werte entsprechende Prozessausgangssignale für die Aktoren erzeugt.

Mittels der im Steuerrezept 19 eingeblendeten Bedien- und Anzeigefelder 17 der Bildelemente 18 kann der Rezeptersteller somit in der entsprechenden Art und Weise wie mittels der im Prozessbild 13 dargestellten Bedien- und Anzeigefelder 17 die zu den Bildelementen 14, 15, 16 gehörigen realen Automatisierungskomponenten (Heizkessel, Motor, Ventil) Produktions-Anlage bedienen und beobachten.

## Patentansprüche

1. Verfahren zum Betreiben einer Automatisierungseinrichtung, wobei
- auf einer grafischen Benutzeroberfläche eines Batch-Systems (3) Rezeptelemente (20) eines Steuerrezepts (19) dargestellt und die Rezeptelemente (20) während des Chargenprozesses sequentiell verarbeitet werden, und
- auf einer grafischen Benutzeroberfläche eines Bedien- und Beobachtungs-Systems (2) Bildelemente (14 bis 17, 18) eines Prozessbildes (13) einer Produktions-Anlage dargestellt werden, die zur Herstellung einer Charge eines Produktes während des Chargenprozesses verwendet wird,
**dadurch gekennzeichnet, dass** zumindest eines der Rezeptelemente (20a) mit zumindest einem der Bildelemente (18) derart verknüpft wird, dass auf der grafischen Benutzeroberfläche des Batch-Systems (3) während der sequentiellen Verarbeitung des Steuerrezepts (19) das zumindest eine verknüpfte Bildelement (18) zu einem Zeitpunkt eingeblendet wird, zu dem das zumindest eine Rezeptelement (20a) gerade verarbeitet wird.

2. Verfahren nach Anspruch 1, **dadurch gekennzeichnet, dass** das eingeblendete Bildelement (18) zum Bedienen der Produktions-Anlage verwendet wird.

3. Verfahren nach Anspruch 1 oder 2, **dadurch gekennzeichnet, dass** das eingeblendete Bildelement (18) für eine vorgegebene Zeitspanne neben dem zumindest einen Rezeptelement (20a) eingeblendet wird.

4. Verfahren nach einem der Ansprüche 1 bis 3, **dadurch gekennzeichnet, dass** mittels einer Bedienereingabe am Batch-System (3) die Einblendung des Bildelements (18) ein- oder ausgeschaltet wird.

5. Automatisierungseinrichtung mit einem Batch-System (3) und einem Bedien- und Beobachtungs-System (2), wobei,
- das Batch-System (3) dazu ausgebildet ist, auf einer grafischen Benutzeroberfläche Rezeptelemente (29)eines Steuerrezepts (19) darzustellen und die Rezeptelemente (20) während eines Chargenprozesses sequentiell zu verarbeiten, und
- das Bedien- und Beobachtungs-System (2) dazu ausgebildet ist, auf einer grafischen Benutzeroberfläche Bildelemente (14 bis 17, 18) eines Prozessbildes (13) einer Produktions-Anlage darzustellen, wobei die Produktions-Anlage während des Chargenprozesses eine Charge eines Produktes herstellt,
**dadurch gekennzeichnet, dass** die Automatisierungseinrichtung dazu ausgebildet ist, zumindest eines der Rezeptelemente (20a) mit zumindest einem der Bildelemente (18) zu verknüpfen, und dass das Batch-System (3) ferner dazu ausgebildet ist, auf seiner grafischen Benutzeroberfläche während der sequentiellen Verarbeitung des Steuerrezepts (19) das zumindest eine verknüpfte Bildelement (20a) zu einem Zeitpunkt einzublenden, zu welchem das Batch-System (3) das zumindest eine Rezeptelement (20a) gerade verarbeitet.

6. Automatisierungseinrichtung nach Anspruch 5, **dadurch gekennzeichnet, dass** das Batch-System (3) dazu ausgebildet ist, das eingeblendete Bildelement (18) zum Bedienen und Beobachten der Produktions-Anlage zu verwenden.

7. Automatisierungseinrichtung nach Anspruch 5 oder 6, **dadurch gekennzeichnet, dass** das Batch-System (3) dazu ausgebildet ist, das eingeblendete Bildelement (18) für eine vorgegebene Zeitspanne neben dem zumindest einen Rezeptelement (20a) einzublenden.

8. Automatisierungseinrichtung nach einem der Ansprüche 5 bis 7, **dadurch gekennzeichnet, dass** das Batch-System (2) dazu ausgebildet ist, die Einblendung des Bildelements (18) einoder auszuschalten.
